# EUROPÄISCHE PATENTSCHRIFT

(11) **EP 1 674 714 B1**
(45) Veröffentlichungstag und Bekanntmachung des Hinweises auf die Patenterteilung: **04.01.2012**
(21) Anmeldenummer: 05110654.0
(22) Anmeldetag: 11.11.2005
(51) Int. Cl.: F02M 37/22

(54) **Kraftstofffilter**
Fuel filter
Filtre à carburant

(30) Priorität: 22.12.2004 DE 102004063015
(43) Veröffentlichungstag der Anmeldung: 28.06.2006
(73) Patentinhaber: MANN+HUMMEL GmbH, 71638 Ludwigsburg (DE)
(72) Erfinder: Roesgen, Andre, 73630, Remshalden (DE)

(56) Entgegenhaltungen:
- WO-A1-01/96731
- WO-A1-2004/007942
- US-A- 4 611 627

## Beschreibung

### Technisches Gebiet

Die Erfindung betrifft ein Kraftstofffilter nach dem Oberbegriff des Anspruches 1.

### Stand der Technik

Aus der US 4740299 ist ein Kraftstofffilter bekannt. Dieses besteht aus einem Gehäuse, welches an einen Befestigungskopf anschraubbar ist. Am unteren Ende des Gehäuses ist ein Sammelraum vorgesehen. Dieser Sammelraum trägt ein Ventil, welches manuell betätigt werden kann und zum Austrag von Wasser aus dem Kraftstofffilter dient.

Ein Nachteil dieses Kraftstofffilters ist darin zu sehen, dass bei der manuellen Betätigung des Auslassventils die Verschmutzungsgefahr der Bedienperson sehr groß ist und außerdem der Austrag von Wasser nur unzureichend erfolgt, da das Einströmen von Luft zum Ausgleich der Füllmenge durch dieses Ventil nicht optimal gewährleistet ist.

Aus der US 5362389 ist eine weitere Anordnung eines Kraftstofffilters bekannt. An diesem ist ebenfalls ein Ventil am unteren Ende des Gehäuses vorgesehen. Auch hier handelt es sich um ein manuell zu betätigendes Ventil, welches derart gestaltet ist, dass die Luftzufuhr automatisch erfolgt. Allerdings besteht der Nachteil, dass eine manuelle Handhabung erforderlich ist.
Die WO01/96731A1 beschreibt einen Dieselkraftstofffilter mit einem vorgesteuerten, elektrischen Entwässerungsventil.
Der WO2004/007942A1 ist ein elektromagnetisch schaltbares Entwässerungsventil für einen Kraftstofffilter zu entnehmen, mittels dessen eine Entwässerungsöffnung und eine Belüftungsöffnung abgedichtet bzw. geöffnet werden kann.

Der Erfindung liegt die Aufgabe zugrunde, die genannten Nachteile zu vermeiden und einen Kraftstofffilter zu schaffen, bei dem funktionssichere Ableitung von Wasser und Zuführung von Luft möglich ist.

Diese Aufgabe wird ausgehend von den Merkmalen des Oberbegriffes des Anspruches 1 durch dessen kennzeichnende Merkmale gelöst.

### Offenbarung der Erfindung

Der wesentliche Vorteil der Erfindung liegt darin, dass ein elektromagnetisch schaltbares Ventil vorgesehen ist, welches sowohl einen Auslass für das Wasser als auch einen Einlass für die Zuführung von Luft öffnet bzw. verschließt, wobei die Luftzufuhr über ein von dem Auslass aus gesehen nach oben sich erstreckendes Rohr erfolgt. Damit wird die Zuführung von Luft bezogen auf die Ableitung von Wasser getrennt, und es findet ein eindeutiger Prozess zum Volumenausgleich statt.

Gemäß einer Weiterbildung der Erfindung ist vorgesehen, zunächst beim Öffnen des Ventils den Wasserauslass zu öffnen und anschließend, d. h. mit einer gewissen Zeitverzögerung, den Lufteinlass. Damit kann sich ein eventueller Innendruck über den Wasserauslass entspannen, und es wird verhindert, dass über den Lufteinlass Flüssigkeit nach außen gelangt.

Weiterbildungsgemäß wird beim Schließen der Wasserauslassöffnung zunächst der Lufteinlass verschlossen und anschließend der Wasserauslass. Auch dies bedeutet, dass in den Lufteinlass keine Flüssigkeit eindringen kann.

In einer vorteilhaften Ausgestaltung des elektromagnetisch schaltbaren Ventils bzw. der elektromagnetischen Einrichtung ist eine stationäre Spule vorgesehen, innerhalb derer sich ein axial beweglich angeordneter Kern befindet. Dieser nach Art eines Kolbens gestalteter Kern oder Anker trägt an einem Ende eine Ventildichtung, wobei diese Ventildichtung den Wasserauslass öffnet bzw. verschließt.

In einer Ausgestaltung der elektromagnetischen Einrichtung ist an dem Kern ein weiterer Ventilsitz angeordnet, welcher allerdings derart eine gewisse axiale Beweglichkeit zu dem Kern aufweist. Dies führt dazu, dass die Luftzufuhröffnung mit einer Zeitverzögerung beim Öffnen bzw. mit einem rascheren Schließen bei der Unterbrechung des Wasseraustrages aus dem Kraftstofffilter erfolgt.

In einer weiteren Ausgestaltung der Erfindung weist das Rohr, mit welchem die Luftzufuhröffnung versehen ist, am oberen Ende eine näherungsweise um 180° gekrümmte Umlenkung auf. In vorteilhafter Weise besteht das Rohr aus einem hydrophoben Werkstoff, welcher das Eindringen von Flüssigkeit in das Rohr verhindert.

Eine weitere Ausgestaltung der Erfindung sieht vor, dass ein Wassersensor ein Signal zur Steuerung der elektromagnetischen Einrichtung erzeugt.

Der Wasserauslass ist zur Vermeidung des Eintrages von Schmutzpartikeln in die Ventilvorrichtung mit einem Siebfilter oder einem Taschenfilter oder ähnliches ausgestattet. Zweckmäßigerweise ist die elektromagnetische Einrichtung ein Modul, welches an ein Kraftstofffiltergehäuse adaptierbar ist.

Diese und weitere Merkmale von bevorzugten Weiterbildungen der Erfindung gehen außer aus den Ansprüchen auch aus der Beschreibung und der Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

Ausführungsbeispiele der Erfindung werden in den Zeichnungen anhand von schematischen Darstellungen beschrieben. Hierbei zeigt
Figur 1 einen Kraftstofffilter in einer Schnittdarstellung und
Figur 2 die Detaildarstellung eines elektromagnetisch schaltbaren Ventils.

### Ausführungsform(en) der Erfindung

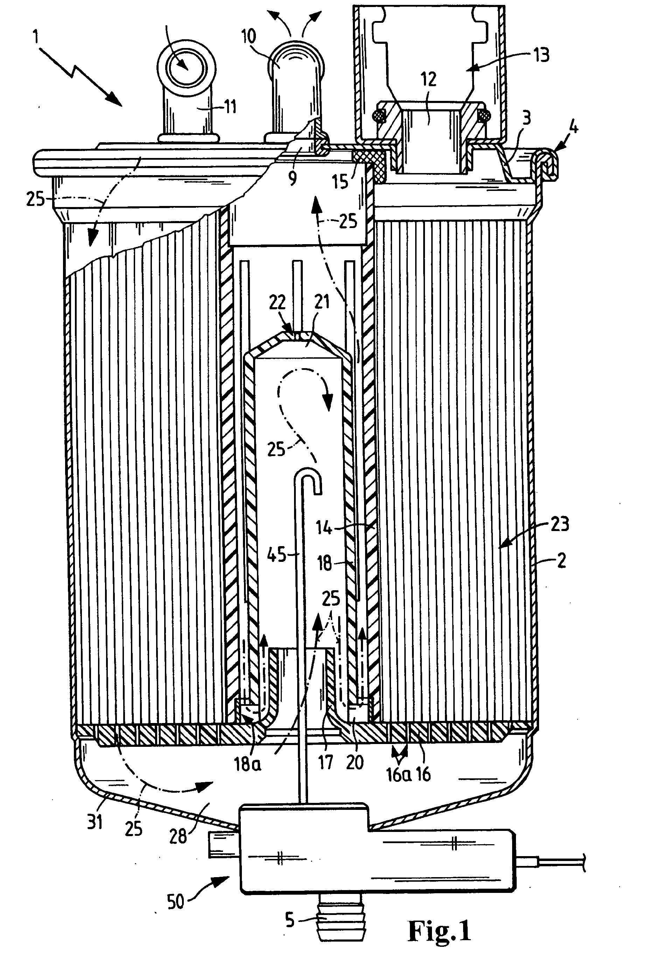

Figur 1 zeigt eine Filteranordnung 1 im Querschnitt. Die Filteranordnung 1 gliedert sich in ein Filtergehäuse 2, das aus dünnem Stahlblech gefertigt ist, sowie in einen Gehäusedeckel 3, der ebenfalls aus dünnem Stahlblech gefertigt ist und der an einer Gehäusekante 4 dicht mit dem Filtergehäuse 2 verbunden ist. An der Unterseite des Filtergehäuses 2 ist ein Ablass 5 vorgesehen.

Im Gehäusedeckel 3 ist zentriert eine Auslassöffnung 9 vorgesehen, in die dicht abschließend ein Auslassstutzen 10 eingesetzt ist. Versetzt von dem Auslassstutzen 10 ist ein Einlassstutzen 11 vorgesehen, der in eine in dieser Ansicht nicht gezeigte Einlassöffnung im Gehäusedeckel 3 eingesetzt ist.

Im Gehäusedeckel 3 ist noch eine Rückführöffnung 12 vorgesehen, in der eine Befestigungseinrichtung 13 eingesetzt ist. Durch die Rückführöffnung 12 wird Kraftstoff zurück zu einem in dieser Ansicht nicht gezeigten Kraftstofftank bewerkstelligt.

Im Bereich um die Auslassöffnung 9 herum ist ein sich zentral vom Gehäusedeckel 3 nach unten erstreckendes Austrittsrohr 14 aus Kunststoff vorgesehen, das sich bis nahezu an die Unterseite des Filtergehäuses 2 erstreckt. Das Austrittsrohr 14 ist an der Oberseite über eine Rohrdichtung 15 dicht mit dem Gehäusedeckel 3 verbunden.

An der Unterseite des Austrittsrohres 14 ist eine gelochte Bodenscheibe 16 vorgesehen, die in der Mitte zu einem Sammeltrichter 17 umgeformt ist. Der Sammeltrichter 17 ragt dabei in das Innere des Austrittsrohres 14 hinein. Im Bereich zwischen dem Sammeltrichter 17 und dem Austrittsrohr 14 ist ein obenseitig geschlossenes Rohr 18 angeordnet, das aus Kunststoff hergestellt ist. An der Oberseite ist das Rohr 18 zu einem Sammeldom 21 ausgebildet, in dem eine Düsenöffnung 22 eingebracht ist. Im Betrieb tritt Kraftstoff durch den Einlassstutzen 11 in das Innere des Filtergehäuses 2 ein. Dadurch stellt sich ein Fluidstrom 25 ein.

Der Fluidstrom 25 durchtritt das Filterelement 23 und die Löcher 16a in der Bodenscheibe 16. Nach dem Austritt aus der Bodenscheibe 16 wird der Fluidstrom 25 an der Unterseite des Filtergehäuses 2 umgelenkt. Dieser Bereich des Filtergehäuses 2 stellt einen Umlenkbereich 28 bereit, in dem im Fluidstrom 25 enthaltenes Wasser von dem Kraftstoffanteil getrennt wird. Der Kraftstoff hat ein spezifisch leichteres Gewicht als das darin enthaltene Wasser, und er tritt daraufhin nach einer Sammlung durch den Sammeltrichter 17 in das Innere des Rohres 18 ein. Der Kraftstoffstrom 25 strömt im Rohr 18 nach oben, kehrt im Bereich des Sammeldoms 21 nach unten um und strömt durch den Bereich zwischen dem Sammeltrichter 17 und dem Rohr 18 nach unten aus. Durch den Zwischenraum 20 zwischen den Arretierungsfüßen 18a hindurch nimmt der Fluidstrom 25 seinen Weg um die Unterkante des Rohres 18 herum und zwischen der Außenseite des Rohres 18 und der Innenseite des Austrittsrohres 14 nach oben. An der Oberseite des Austrittsrohres 14 strömt der Kraftstoff aus dem Aus**lassstutzen 10 aus.**

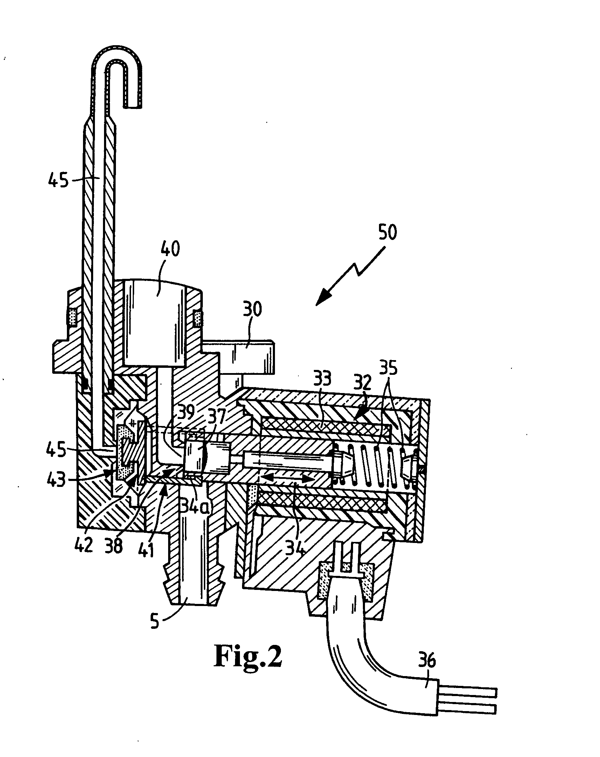

In Figur 2 ist das elektromagnetisch schaltbare Ventil 50 in einer Schnittdarstellung gezeigt. Dies besteht aus einem Gehäuse 30, welches an den Boden 31 des Filtergehäuses 2 (siehe Figur 1) angeschraubt, angeschnappt oder angeklebt werden kann. An dem Gehäuse ist ein Elektromagnet 32 angeordnet. Dieser Elektromagnet besteht aus einer Spule 33. Innerhalb dieser befindet sich ein axial beweglich gelagerter Kern 34, der am rechtsseitigen Ende mit einer Druckfeder 35 beaufschlagt ist. Diese Druckfeder 35 bewirkt eine Kraft in Richtung auf das gegenüberliegende Ende des Kerns 34. Die Spule wird über den elektrischen Anschluss 36 mit Strom versorgt. Der Kern 34 trägt eine Ventilplatte 37, die auf einen Ventilsitz 38 gerichtet ist. Die Ventilplatte verschließt die Öffnung 39, durch welche - ausgehend von der oberen Sammelöffnung 40 - Flüssigkeit in geöffnetem Zustand nach unten zu dem Auslass 5 abfließen kann. An dem Kern 34 sind im Bereich der Ventilplatte 37 drei Mitnehmer 41 angeordnet. Diese Mitnehmer 41 sind mit einer weiteren Ventilplatte 42 verbunden. Diese Ventilplatte 42 trägt einen Überzug 43 aus einem Elastomer. Das Elastomer verschließt die Öffnung 44. Diese Öffnung dient zum Zuführen von Luft aus der Umgebung in das Steigrohr 45 (siehe Figur 1). Die Mitnehmer 41 sind am Kern 34 in Nuten 34a geführt, und zwar derart, dass sich bei einer Bewegung des Kerns 34 gegen die Wirkung der Druckfeder 35 die Ventilplatte 42 erst bewegt, wenn der Kern einen bestimmten Weg zurückgelegt hat. Es handelt sich hierbei um eine Verzögerungsstrecke von wenigen Millimetern.

In der hier gezeigten Darstellung sind sowohl die Auslassöffnung 5 für das sich im unteren Bereich des Kraftstofffilters angesammelte Wasser verschlossen, als auch die Einlassöffnung 44 für die Zuführung von Luft. Sofern sich der Kern 34 nach rechts bewegt, wird zunächst die Öffnung 39 geöffnet, anschließend mit einer bestimmten Zeitverzögerung die Öffnung 44. Das im Kraftstofffilter befindliche Wasser kann austreten. Gleichzeitig kann Luft über das Steigrohr 45 einströmen. Über einen hier nicht dargestellten Wassersensor wird die Spule 33 solange angesteuert, bis das gesamte Wasser aus dem Kraftstofffilter ausgetragen ist.

## Patentansprüche

1. Kraftstofffilter, bestehend aus einem Gehäuse, einem in dem Gehäuse angeordneten Filterelement, einem Rohflüssigkeitszulauf, einem Reinflüssigkeitsablauf und einem am geodätisch unteren Ende des Gehäuses angeordneten Auslass für am Boden des Gehäuses angesammeltes Wasser, der mit einem elektromagnetisch schaltbaren Ventil versehen ist, wobei diese Schalteinrichtung sowohl den Auslass für die Abführung von Wasser als auch einen Einlass für die Zuführung von Luft öffnet und/oder verschließt, **dadurch gekennzeichnet, dass** die Luftzufuhr über ein von dem Auslass aus gesehen nach oben sich erstreckendes Rohr erfolgt.

2. Kraftstofffilter nach Anspruch 1, **dadurch gekennzeichnet, dass** die elektromagnetische Einrichtung bei einem Öffnungsvorgang zunächst den Wasserauslass und zeitverzögert den Lufteinlass öffnet.

3. Kraftstofffilter nach Anspruch 1, **dadurch gekennzeichnet, dass** die elektromagnetische Einrichtung beim Schließvorgang zunächst den Lufteinlass und anschließend den Wasserauslass verschließt.

4. Kraftstofffilter nach einem der vorherigen Ansprüche, **dadurch gekennzeichnet, dass** die elektromagnetische Einrichtung eine stationäre Spule ist, innerhalb derer ein axial beweglich angeordneter Kern vorgesehen ist, welcher an wenigstens einem Ende eine Ventildichtung trägt und diese Ventildichtung den Wasserauslass öffnet bzw. verschließt.

5. Kraftstofffilter nach Anspruch 4, **dadurch gekennzeichnet, dass** in dem Kern mit einem axialen Lagerspiel ein weiterer Ventilsitz angeordnet ist, welcher die Luftzufuhröffnung öffnet bzw. schließt.

6. Kraftstofffilter nach einem der vorherigen Ansprüche, **dadurch gekennzeichnet, dass** das von dem Auslass aus gesehen nach oben sich erstreckende Rohr am oberen Ende eine näherungsweise 180° Umlenkung aufweist, wobei das Rohr bevorzugt aus einem hydrophoben Werkstoff hergestellt ist.

7. Kraftstofffilter nach einem der vorherigen Ansprüche, **dadurch gekennzeichnet, dass** ein Wassersensor vorgesehen ist und das Sensorsignal zur Steuerung der elektromagnetischen Einrichtung nutzbar ist.

8. Kraftstofffilter nach einem der vorherigen Ansprüche, **dadurch gekennzeichnet, dass** der Wasserauslass mit einem Siebfilter zur Vermeidung des Eintrages von Schmutzpartikeln in die Ventilvorrichtung vorgesehen ist.

9. Kraftstofffilter nach einem der vorherigen Ansprüche, **dadurch gekennzeichnet, dass** das Ventil und die elektromagnetische Einrichtung ein Modul ist, welches an dem Gehäuse adaptierbar ist.

## Claims

1. Fuel filter, consisting of a housing, a filter element disposed in the housing, a dirty liquid inlet, a clean liquid outlet and an outlet for water collected at the bottom of the housing disposed geodetically at the lower end of the housing and equipped with an electromagnetically switched valve, the switching device opening and/or closing the outlet for discharging water and the inlet for supplying air, **characterized in that** the air supply is realized via an upward extending pipe seen from the outlet.

2. Fuel filter according to claim 1, **characterized in that** the electromagnetic device opens during an opening process at first the water outlet and then with a certain time delay the air intake.

3. Fuel filter according to claim 1, characterize in that the electromagnetic device closes during a closing process at first the air intake and then the water outlet.

4. Fuel filter according to one of the above claims, characterize in that the electromagnetic device is a stationary coil within which a movably disposed core is provided that has a valve seal at at least one end and that this valve seal opens or closes the water outlet.

5. Fuel filter according to claim 4, characterize in that in the core another valve seat with an axial bearing play is disposed that opens or closes the air supply opening.

6. Fuel filter according to one of the above claims, **characterized in that** the pipe extending to the top seen from the outlet features an approximate 180° deviation, the pipe being preferably made of a hydrophobic material.

7. Fuel filter according to one of the above claims, characterize in that a water sensor is provided and that the sensor signal can be used for controlling the electromagnetic device.

8. Fuel filter according to one of the above claims, **characterized in that** the water outlet is provided with a strainer for avoiding contaminant particles to be entrained into the valve device.

9. Fuel filter according to one of the above claims, **characterized in that** the valve and the electromagnetic device are a module that can be dapated to the housing.

## Revendications

1. Filtre à carburant, composé d'un boîtier, d'un élément filtrant disposé dans le boîtier, d'une entrée de liquide brut, d'une sortie de liquide pur et d'un écoulement destiné à évacuer l'eau accumulée au fond du boîtier, disposé à l'extrémité géodésique inférieure du boîtier et pourvu d'une soupape à commutation électromagnétique, ce dispositif de commutation ouvrant et/ou fermant aussi bien la sortie d'évacuation d'eau qu'une entrée d'admission d'air, **caractérisé en ce que** l'admission d'air s'opère par un tube s'étendant vers le haut, considéré depuis l'écoulement.

2. Filtre à carburant selon la revendication 1, **caractérisé en ce que**, lors d'une opération d'ouverture, le dispositif électromagnétique ouvre d'abord l'écoulement d'eau puis, de manière temporisée, l'admission d'air.

3. Filtre à carburant selon la revendication 1, **caractérisé en ce que**, lors d'une opération de fermeture, le dispositif électromagnétique ferme d'abord l'admission d'air puis l'écoulement d'eau.

4. Filtre à carburant selon l'une des revendications précédentes, **caractérisé en ce que** le dispositif électromagnétique est une bobine stationnaire au sein de laquelle est prévu un noyau mobile en sens axial qui porte un joint de soupape à au moins une extrémité, ce joint de soupape ouvrant ou fermant l'écoulement d'eau.

5. Filtre à carburant selon la revendication 4, **caractérisé en ce qu'**un autre siège de soupape est disposé dans le noyau avec un jeu de palier axial, ce siège ouvrant ou fermant l'ouverture d'admission d'air.

6. Filtre à carburant selon l'une des revendications précédentes, **caractérisé en ce que** le tube s'étendant vers le haut, considéré depuis l'écoulement, décrit à l'extrémité supérieure un coude d'approximativement 180°, le tube étant de préférence réalisé en un matériau hydrophobe.

7. Filtre à carburant selon l'une des revendications précédentes, **caractérisé en ce qu'**un détecteur d'eau est prévu et que le signal du détecteur peut être mis en oeuvre pour commander le dispositif électromagnétique.

8. Filtre à carburant selon l'une des revendications précédentes, **caractérisé en ce que** l'écoulement d'eau est doté d'un filtre-tamis afin d'éviter l'introduction de particules d'impuretés dans le dispositif à soupape.

9. Filtre à carburant selon l'une des revendications précédentes, **caractérisé en ce que** la soupape et le dispositif électromagnétique forment un module qui peut être adapté au boîtier.
